# EUROPÄISCHE PATENTSCHRIFT

(11) **EP 0 284 658 B1**
(45) Veröffentlichungstag und Bekanntmachung des Hinweises auf die Patenterteilung: **04.05.1994**
(21) Anmeldenummer: 87117516.2
(22) Anmeldetag: 26.11.1987
(51) Int. Cl.: G02B 6/38

(54) **Verbindungseinrichtung für zwei Lichtwellenleiter**
Connecting device for two light wave guide
Dispositif de connexion pour deux guides d'ondes lumineuses

(30) Priorität: 26.03.1987 DE 3709895
(43) Veröffentlichungstag der Anmeldung: 05.10.1988
(73) Patentinhaber: SIEMENS AKTIENGESELLSCHAFT, 80333 München (DE)
(72) Erfinder: Finzel, Lothar, Dipl.-Ing., D-8000 München 71 (DE)

(56) Entgegenhaltungen:
- EP-A- 0 146 471
- EP-A- 0 154 689
- DE-A- 2 807 860
- US-A- 4 320 938
- US-A- 4 593 972

## Beschreibung

Die Erfindung betrifft einen Spleißverbinder für zwei LWL-Enden mit einem Trägerkörper, der eine Längsnut aufweist, mit einem im zentralen Bereich der Nut angeordneten Halteteil, das in der Nut in radialer Richtung beweglich ist und das auf der der Nut zugewandten Fläche eine Rille zur Führung und Klemmung der abgemantelten LWL-Enden aufweist, mit Preßhülsen, die außen auf dem Trägerkörper aufsitzen und längs verschiebbar sind zum Zusammenhalt von Halteteil und Trägerkörper im montiertem Zustand und zur Erzeugung des für die Klemmung erforderlichen Anpreßdrucks.

Eine Verbindungseinrichtung dieser Art ist aus der US-A-4 593 972 bekannt. Außerhalb der Preßhülsen werden die Lichtwellenleiter jeweils durch eine Bohrung im Trägerkörper hindurchgeführt und in eine Dichtung aus Gummi- bzw. Elastomermaterial eingebettet. Durch Anziehen einer Überwurfmutter werden Kräfte auf die Dichtung ausgeübt, die auf die Lichtwellenleiter übertragen werden. Die Art und Größe dieser Kräfte hängt davon ab, wie weit eine Bedienungsperson die Überwurfmutter anzieht. Auch ist nachteilig, daß bei der Überwurfmutter und beim Trägerkörper jeweils ein Gewinde geschnitten werden muß.

Aus der EP-PS 0 045 594 ist ein Aufnahmeteil bekannt, das als ein durchgehender, aus einem Kunststoffmaterial bestehender Körper ausgebildet ist, der eine relativ (bezogen auf den Durchmesser der Lichtwellenleiter) große Bohrung aufweist. In dieser durchgehenden Bohrung sind drei zylindrische Stäbe angeordnet, deren Durchmesser bezogen auf den Durchmesser der abgemantelten Lichtleitfaser so gewählt ist, daß diese durch den inneren Zwickelraum der drei zylindrischen Stäbe fixiert wird. Der hierfür benötigte Anpreßdruck wird durch zwei Preßhülsen erzeugt, welche außen auf dem Aufnahmeteil angeordnet werden. Die Preßhülsen weisen in ihrem Inneren konische Öffnungen auf, mit denen sie auf entsprechende konische Erweiterungen des Aufnahmeteils durch Axialverschieben aufgepreßt werden. Das für das Einführen der Lichtwellenleiter in die Verbindungseinrichtung benötigte Spiel kann also allein durch eine entsprechende elastische Aufweitung des Aufnahmeteils herbeigeführt werden, da dieses, wie bereits erwähnt, einteilig ausgebildet ist. Umgekehrt hat dies zur Folge, daß für ein ausreichend festes Zusammenpreßen der Lichtleitfasern im montierten Zustand ebenfalls ein entsprechend hoher Anpreßdruck benötigt wird.

Der vorliegenden Erfindung liegt die Aufgabe zugrunde, eine Verbindungseinrichtung zu schaffen, bei der in einfacher Weise eine zuverlässige Führung und Sicherung der Lichtwellenleiter erzielbar ist. Gemäß der Erfindung wird dies bei einer Verbindungseinrichtung der eingangs genannten Art erreicht durch jeweils auf einer Seite des zentralen Bereiches in der Nut angeordnete Mittel zur Fixierung eines ummantelten LWL-Abschnitts und zur Führung eines abgemantelten LWL-Abschnitts, wobei die Mittel zur Fixierung und Führung entweder aus einem in radialer Richtung in der Nut beweglichen Bauteil mit einem Fixierungsteil und einem Führungsteil bestehen oder aus zwei Bauteilen, nämlich einem in radialer Richtung in der Nut beweglichen Fixierungsteil und einm Führungsteil bestehen, und durch zwei zusätzliche, jeweils auf einer Seite des zentralen Bereichs auf dem Trägerkörper aufsitzende, federnde Preßhülsen zur Erzeugung des für die Fixierung des ummantelten LWL-Abschnitts erforderlichen Anpreßdrucks.

Durch das zusätzliche Führungsteil wird der Lichtwellenleiter besser auf seine an der Spleißstelle benötigte Position ausgerichtet. Seine Lage kann zusätzlich noch durch das Fixierungsteil gesichert werden. Zur Sicherung des Fixierungs- und/oder Führungsteils ist jeweils nur eine einfach herzustellende und aufzubringende federnde Preßhülse erforderlich.

Weiterbildungen der Erfindung sind in Unteransprüchen wiedergegeben.

Die Erfindung und ihre Weiterbildungen werden nachfolgend anhand von Zeichnungen näher erläutert. Es zeigen:
- Fig. 1: im Längsschnitt den grundsätzlichen Aufbau einer Verbindungseinrichtung,
- Fig. 2: den Querschnitt der Anordnung nach Fig. 1 in vergrößerter Darstellung,
- Fig. 3: in perspektivischer Darstellung eine erste Ausführungsform der erfindungsgemäßen Art der Zugentlastung für beschichtete Lichtwellenleiter
- Fig. 4: im Längsschnitt in vergrößerter Darstellung die Struktur der Zugentlastung des beschichteten Lichtwellenleiters nach Fig. 3,
- Fig. 5: in perspektivischer Darstellung eine zweite Ausführungsform der Erfindung für die Zugentlastung beschichteter Lichtwellenleiter,
- Fig. 6: im Längsschnitt und
- Fig. 7: im Querschnitt in vergrößerter Darstellung Einzelheiten der Anordnung nach Fig. 5 und zwar vor der Klemmung der beschichteten Lichtwellenleiter,
- Fig. 8: im Längsschnitt und
- Fig. 9: im Querschnitt die Anordnung nach Fig. 6 und Fig. 7, wobei die Klemmung des beschichteten Lichtwellenleiters erfolgt ist.
- Fig. 10: im Längsschnitt ein vollständige Darstellung der in den Figuren 5 - 9 wiedergegebenen Bauweise,
- Fig. 11: im Längsschnitt eine Abwandlung der Möglichkeit der Zugentlastung des beschichteten Lichtwellenleiters durch Drehen der Preßhülsen,
- Fig. 12: im Querschnitt die Struktur nach Fig. 11 im Zustand vor der Klemmung des beschichteten Lichtwellenleiters und
- Fig. 13: die Anordnung nach Fig. 12 im Zustnad des endgültig geklemmten beschichteten Lichtwellenleiters,
- Fig. 14: in perspektivischer Darstellung einen Einfaserverbinder mit vereinfachter Zugentlasteung gemäß einer weiteren Ausführungsform der Erfindung,
- Fig. 15 bis 18: in vergrößerter Darstellung im Detail eine Zugentlastung mit Filmgelenk in Seitenansicht, Draufsicht, Frontsicht und im Querschnitt,
- Fig. 19: in perspektivischer Darstellung einen Einfaserverbinder mit zusammenhängenden Preßhülsen gemäß einer weiteren Ausführungsform der Erfindung,
- Fig. 20 bis 23: in vergrößerter Darstellung eine Zugentlastung für die zusammenhängenden Doppelpreßhülsen in Seitenansicht, Draufsicht, Frontansicht und im Querschnitt,
- Fig. 24: im Längsschnitt in vergrößerter Darstellung die Struktur der Zugentlastung für den Einfaserverbinder mit zusammenhängenden Doppelhülsen nach den Fig. 19 bis 23,
- Fig. 25 und 26: in Seiten- und Frontansicht einen abgewandelten Aufbau des zentralen Halteelements nach Fig. 19 als Zweifaserverbinder und
- Fig. 27 und 28: in Seiten- und Frontansicht das Zugentlastungs- und Halteteil nach Fig. 20 bis 23 in Abwandlung für einen Zweifachverbinder.

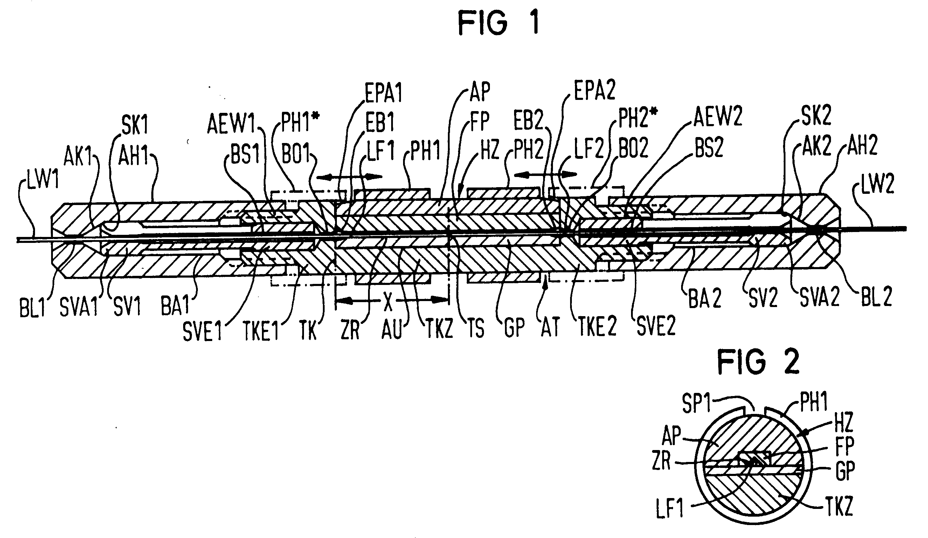

Die Verbindungseinrichtung nach Fig. 1 weist ein Aufnahmeteil AT auf, welches den Mittelteil der Gesamtanordnung bildet. Dieses Aufnahmeteil AT ist zweiteilig ausgebildet und besteht aus einem zylindrischen Trägerkörper TK, welcher eine Ausnehmung AU aufweist. In diese Ausnehmung AU ist ein zentrales Halteteil HZ eingesetzt, wobei diese beiden Teile außen durch Zwei Preßhülsen PH1 und PH2 zusammengehalten werden.

Die Ausnehmung AU reicht über die Hälfte des Querschnitts des Trägerkörpers TK hinaus. In der Ausnehmung AU ist eine über die volle Querschnittsbreite sich streckende Grundplatte GP vorgesehen, welche vorteilhaft aus einem Silizium oder Glasplättchen besteht. Diese Grundplatte GP hat etwa rechteckigen Querschnitt (vgl. Fig. 2). Auf der Grundplatte GP liegt eine Führungsplatte FP auf, welche vorteilhaft ebenfalls aus Siliziummaterial oder Glas besteht und eine vorzugsweise V-förmige Zentrierrille ZR aufweist. Diese Zentrierrille ZR ist mit ihrer Öffnung auf die Grundplatte GP hingerichtet und nimmt im montierten Zustand eine abgemantelte (d.h. vom Coating entfernte) Lichtleitfaser LF1 bzw. LF2 auf. Dabei wird die Lichtleitfaser LF1 bzw. LF2 gegen die Grundplatte GP gedrückt. Die Führungsplatte FP ist in einer entsprechenden Längsnut einer Abdeckplatte AP angeordnet und die Gesamtstruktur, gebildet aus dem mittleren Teil TKZ des Trägerkörpers TK, der Grundplatte GP und der Führungsplatte FP in der Abdeckplatte AP hat außen wieder die aus Fig. 2 ersichtliche kreisförmige Kontur. Die Preßhülsen PH1 und PH2 sind zweckmäßig als geschlitzte Hülsen ausgebildet, d.h. sie weisen einen in axialer Richtung sich erstreckenden Spalt auf, der in Fig. 2 bei der Preßhülse PH1 mit SP1 bezeichnet ist. In den Endbereichen EB1 und EB2 weist die Führungsplatte FP einen entsprechenden verbreiterten Einlauftrichter auf, um das Einführen der Lichtleitfasern LF1 und LF2 zu erleichtern. Es kann auch zweckmäßig sein, korrespondierend zu den Endbereichen EB1 und EB2 bei der Grundplatte GP ebenfalls eine entsprechende einen Einlauftrichter ergebende Aufweitung vorzusehen.

Die Endbereiche TKE1 und TKE2 des Trägerkörpers TK sind außen ebenfalls kreisrund ausgebildet und weisen in ihrem Zentrum jeweils Bohrungen BO1 und BO2 auf, welche so dimensioniert sind, daß die noch mit der Beschichtung (Coating) versehenen Lichtwellenleiter LW1 und LW2 hindurchgeschoben werden können. Die Beschichtung der Lichtwellenleiter LW1 und LW2 wird soweit entfernt, daß die Lichtleitfaser mit ihrem abgemantelten Teil also der mit LF1 bzw. LF2 bezeichnete Bereich etwa bis zur Stoßstelle TS reicht. Dabei bildet der abgeschrägte Endbereich EB1 und EB2 bei der Führungsplatte FP gleichzeitig den Anschlag für das stirnseitige Ende der Faserumhüllung.

An den nach außen ragenden Teilen der Endbereiche TKE1 und TKE2 des Trägerkörpers TK ist ein Gewindestutzen angebracht, der ein Außengewinde aufweist. Anschließend folgt jeweils an den beiden Enden eine Außenhülse AH1 bzw. AH2, welche ein Innengewinde aufweist und so mit dem Außengewinde der Endbereiche der Trägerkörper TKE1 und TKE2 eine Verschraubung AEW1 bzw. AEW2 bildet.

Im Inneren der Außenhülsen AH1 und AH2 ist eine Bohrung BA1 bzw. BA2 größerer Länge vorgesehen, welche der Aufnahme einer Spannvorrichtung SV1 bzw. SV2 dient. Am äußeren Ende der Außenhülsen AH1 und AH2 geht die größere Bohrung BA1 bzw. BA2 in eine engere Bohrung BL1 bzw. BL2 über, welche so dimensioniert ist, daß der mit der Umhüllung versehene Lichtwellenleiter LW1 bzw. LW2 noch hindurchgeschoben werden kann.

Die Bohrung BA1 bzw. BA2 endet in einem konisch sich nach innen verjüngenden Teil AK1 bzw. AK2. Im Inneren der Bohrungen BA1 bzw. BA2 ist eine Spannvorrichtung SV1 bzw. SV2 angeordnet, welche der Zugentlastung der Lichtwellenleiter LW1 bzw. LW2 dient. Im vorliegenden Beispiel ist angenommen, daß diese Spannvorrichtung SV1 bzw. SV2 aus einer Art Dreibackenfutter besteht, wobei am nach außen gerichteten Ende eine konische Abschrägung SK1 bzw. SK2 vorhanden ist, welche mit der konischen Verjüngung AK1 bzw. AK2 der Bohrungen BA1 bzw. BA2 in Eingriff kommt. Die Spannfuttervorrichtung SV1 bzw. SV2 ist mit ihren nach innen gerichteten Endbereichen SVE1 bzw. SVE2 in einer Bohrung in den Endbereichen TKE1 bzw. TKE2 des Trägerkörpers TK gehalten. Im Spannfutter selbst ist eine durchgehende Bohrung BS1 bzw. BS2 für die Aufnahme des ummantelten Lichtwellenleiters LW1 bzw. LW2 vorgesehen.

Die Herstellung einer Lichtwellenleiterverbindung erfolgt in folgenden Schritten:
Zunächst werden die beiden Presshülsen PH1 und PH2, wie durch die Pfeile angedeutet, in die gestrichelt gezeichnete Montageposition PH1* und PH2* geschoben. Dadurch wird der Anpreßdruck im zentralen Bereich des aufnahmeteils AT weggenommen und die Führungsplatte FP und die Abdeckplatte AP können sich in gewissem Umfang in radialer Richtung nach außen bewegen. Erleichtert wird dies dadurch, daß der Endbereich EPA1 und EPA2 der Abdeckplatte AP etwas abgeschrägt ist, wobei das Maß der Abschrägung die Größe des für das Einschieben des Lichtwellenleiters LF1 bzw. LF2 benötigten radialen Spiels festlegt. Gleichzeitig ist dadurch sichergestellt, daß nicht die Einzelteile völlig auseinanderfallen, sondern die Gesamtanordnung in einem vormontierten Zustand erhalten bleibt. Die Lichtwellenleiter LW1 und LW2 werden auf eine Länge von X von (ca. 7 mm) ihrer Ummantelung (Coating) befreit. Die Länge X wird etwas größer gewählt als der Abstand zwischen dem Einlaufbereich EB1 der Führungsplatte FP und der Stoßstelle TS der Lichtwellenleiter LF1 bzw. LF2, die ihrerseits etwa in der Mitte der Führungsplatte FP zu liegen kommt.

Die beiden Außenhülsen AH1 und AH2 werden um einige Gewindegänge zurückgedreht, wodurch sichergestellt ist, daß die Spannvorrichtungen SV1 und SV2 gelockert sind. Weiterhin werden die beiden Preßhülsen PH1 und PH2 in die mit PH1* und PH2* bezeichnete Position verschoben. Ein Teil der Preßhülse PH1 ragt dabei in den nach innen abgeschrägten Teil EPA1 der Abdeckplatte AP hinein. Durch diese Abschrägung wird ein radiales Spiel zwischen der fest im Trägerkörper TK angebrachten Grundplatte GP und der Führungsplatte FP erzeugt, was die Einführung der Lichtleitfaser LF1 erleichtert. Die erste Faser, z.B. LW1, wird nun unter leichtem Drehen bis zum Anschlag eingeschoben, wobei der Anschlag im Bereich der Einführungsöffnung EB1 der Führungsplatte FP liegt, weil dort die Faserumhüllung anstößt. Die Zentrierrille ZR in der Führungsplatte FP ist ja so dimensioniert, daß sie praktisch nur die blanke Lichtleitfaser LF1 aufzunehmen gestattet. Es kann vorteilhaft sein, die abgesetzte Faser nach Erreichen des Anschlags wieder etwas, z.B. 1 mm, zurückzuziehen. Jetzt wird die zugehörige Preßhülse PH1 leicht auf das Aufnahmeteil AT aufgeschoben (also etwa in einem Bereich zwischen den beiden dargestellten Endpositionen). Wie weit die Preßhülse PH1 verschoben wird, hängt davon ab, daß der gegenüberliegende, also für die Aufnahme der Lichtleitfaser LF2 vorgesehene rechte Teilbereich des Aufnahmeteils AT noch nicht geklemmt wird. Hier hat die Abschrägung im Bereich EPA1 auch den Vorteil, daß sie eher dahin wirkt, daß der rechte Teil des zentralen Halteteils HZ nach oben denn nach unten gedrückt wird. Jetzt wird durch Drehen der Außenhülse AH1 die Spannvorrichtung SV1 in radialer Richtung zusammengepreßt und hält dadurch den beschichteten Lichtwellenleiter LW1 fest. Erreicht wird dies durch den Eingriff der konischen Bereiche AK1 und SK1 der Außenhülse AH1 und der Spannvorrichtung SV1. Damit ist die Zugentlastung und die Abfangung des Lichtwellenleiters LW1 sichergestellt. Dabei genügt ein etwa handfestes Zudrehen der Außenhülse AH1, die gegebenenfalls mit einer Rändelung oder dergleichen versehen sein kann. Es ist also für die Montage kein Werkzeug notwendig.

Jetzt wird der in ähnlicher Weise der um die Länge X (ca. 7mm) abgemantelte Lichtwellenleiter LW2 drehend in die (gelockerte) Außenhülse AH2 eingeschoben, und zwar so weit, bis die beiden Faserenden der Lichtleitfasern LF1 und LF2 aneinanderstoßen. Im Bereich der Stoßstelle TS bzw. im Bereich zwischen der Führungsplatte FP und der Grundplatte GP ist eine entsprechende Menge von Immersionsflüssigkeit vorhanden. Anschließend wird die Lichtleitfaser LF1 so etwas ausgebogen, daß ein ausreichender Druck in Richtung auf die Stoßstelle TS entsteht und beibehalten wird. Jetzt wird die Preßhülse PH2 aus ihrer seitlichen Stellung PH2* nach innen verschoben (wie ausgezogen dargestellt) und erreicht die mit PH2 bezeichnete Endposition. Da nunmehr die Spleißstelle selbst mit den blanken Lichtleitfasern LF1 und LF2 ausreichend gesichert ist, wird die Außenhülse AH2 nach innen, d.h. in Richtung auf die Stoßstelle TS geschraubt und dadurch in der bereits beschriebenen Weise über die Spannvorrichtung SV2 der notwendige Anpreßdruck für die Abfangung erzeugt. Ganz zum Schluß wird die linke Preßhülse in die mit PH1 bezeichnete Endposition geschoben.

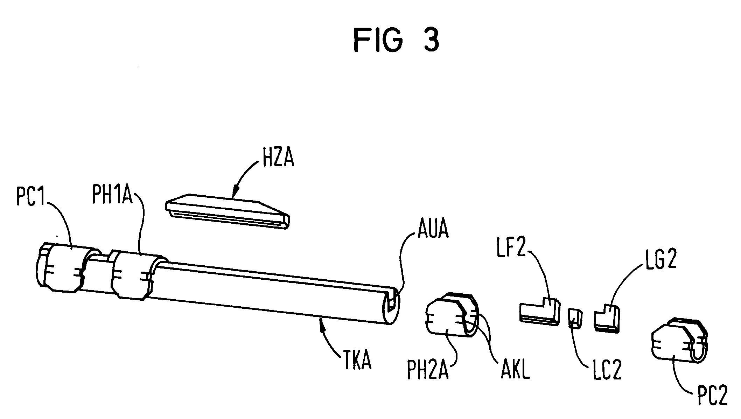

Die Fixierung der noch eine Schutzhülle (coating) aufweisenden Lichtwellenleiter LW1 und LW2 läßt sich gegenüber dem Ausführungsbeispiel nach Fig. 1 und Fig. 2 noch wesentlich einfacher gestalten, was nachfolgend im einzelnen beschrieben wird. Soweit gleiche Teile wie bei dem Ausführungsbeispiel nach Fig. 1 verwendet werden, sind die dortigen Bezugszeichen beibehalten worden und lediglich durch Anfügen des Buchstabens "A" ergänzt. So ist bei der Ausführungsform nach Fig. 3 ein Trägerkörper TKA vorgesehen, der eine Längsnut AUA aufweist. In diese Längsnut ist eine hier nicht sichtbare Grundplatte (analog GP in Fig. 1) eingelegt und die Öffnung im Stoßbereich wird durch das zentrale Halteteil HZA abgedeckt. Die beiden mit einem Schlitz versehenen Preßhülsen PH1A und PH2A dienen der Fixierung des zentralen Halteteils HZA in der in Fig. 2 beschriebenen Weise.

Abweichend von der Ausführungsform nach Fig. 1 wird auch die Halterung bzw. Abfangung der noch ummantelten Lichtwellenleiter LW1 und LW2 (also im Außenbereich), mittels Preßhülsen bewerkstelligt, die mit PC1 und PC2 bezeichnet sind. Diese Preßhülsen sind genau so aufgebaut wie die Preßhülsen PH1A und PH2A, welche der Fixierung der abgemantelten Lichtleitfaser dienen. Im einzelnen ist die Nut AUA soweit verlängert, daß sie bis in den Bereich reicht, in welchem die Abfangung der noch ummantelten Lichtwellenleiter vorgenommen werden soll. Zur Halterung der ummantelten Lichtwellenleiter ist eine Reihe von Einsatzstücken vorgesehen, welche in die Längsnut AUA eingeführt werden können. Im einzelnen handelt es sich dabei, wie im rechten Teil der Fig. 3 dargestellt ist, um eine Faserführung LF2, ein der Fixierung des ummantelten Lichtwellenleiters dienendes Fixierungsteil LC2 und ein Führungsteil für den ummantelten Lichtwellenleiter mit der Bezeichnung LG2. Diese Bauteile weisen an ihrer Unterseite längslaufende Nuten, vorzugsweise etwa V-förmiger oder U-förmiger Gestalt auf, welche zur Aufnahme der entsprechenden ummantelten Lichtwellenleiter dienen (bei LC2 und LG2), während die Nut bei der Faserführung LF2 an den Außendurchmesser der abgemantelten blanken Lichtleitfaser angepaßt ist.

Der Vorteil dieser Ausführungsform nach Fig. 3 besteht vor allem darin, daß nur eine Art von Preßhülsen PC1,PC2 bzw. PH1A und PH2A sowohl für die Faserfixierung als auch für die Fixierung der ummantelten Lichtwellenleiter benötigt wird. Die Fixierung selbst im fertig montierten Zustand erfolgt durch einfaches Längsverschieben dieser Preßhülsen, wobei hierfür normalerweise keine Werkzeuge erforderlich sind und allein mit den Fingern diese Längsverschiebung und Fixierung durchgeführt werden kann. Das Längsverschieben der Preßhülsen PC1-PH2A wird durch je zwei laschenförmige Ausklinkungen AKL an den Preßhülsen erleichtert. Die Ausklinkungen AKL bieten dem Daumennagel bzw. den Fingerkuppen einen besseren Halt. Statt Ausklinkungen können auch ringförmige Wülste, Warzen oder dergleichen am Preßhülsenumfang herausgedrückt werden.

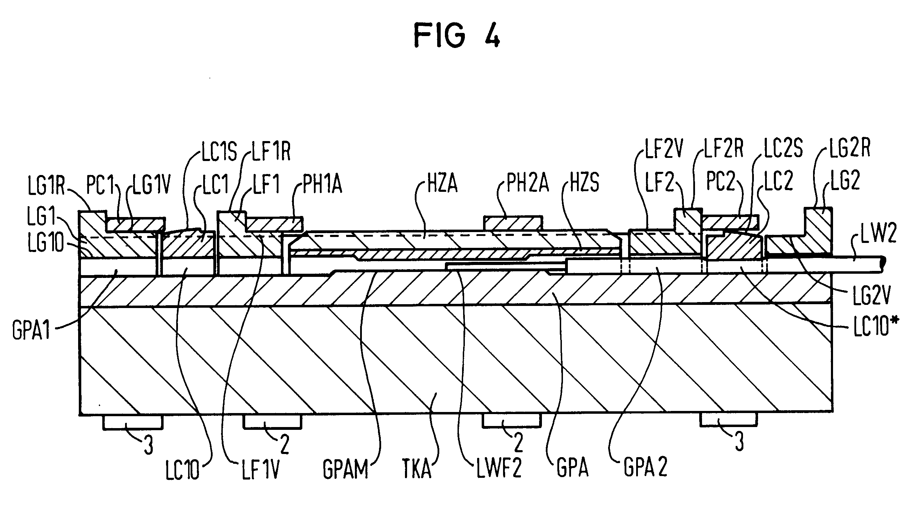

Bei der Querschnittsdarstellung nach Fig. 4 ist die Anordnung nach Fig. 3 im vergrößerten Zustand und komplett montiert gezeichnet. Hier ist die in die Nut des Trägerkörpers TKA eingesetzte, vorzugsweise aus Silizium bestehende Grundplatte GPA zu sehen, wobei sie in ihrem Mittelteil einen Bereich GPAM aufweist, welcher erhöht ist und der Aufnahme der blanken Lichtleitfaser dient. Die entsprechend abgesenkten Außenteile GPA1 und GPA2 dienen der Fixierung der noch ummantelten Lichtwellenleiter. Diese Struktur der Grundplatte GPA wird bevorzugt durch Siliziumätztechnik erreicht.

Im linken Teil ist der Zustand der Preßhülsen PC1 und PH1A so gezeichnet, wie er für die Montage d.h. Einführung der Lichtwellenleiter vorgesehen ist. Das Führungsteil LG1, welches einen erhöhten äußeren Rand LG1R und innen eine entsprechende Absenkung LG1V aufweist, dient als Führung und Anschlag für die Preßhülse PC1. Dabei ist vorgesehen, daß das Führungsteil LG1 für den ummantelten Lichtwellenleiter in der Führungsnut AUA (vgl. Fig. 3) seitlich arretiert ist, z.B. durch Kleben, Verhaken oder dgl. Die Durchtrittsöffnung LG1O (in Form einer V-Nut) des Führungsteils LG1 ist so groß gewählt, daß der ummantelte Lichtwellenleiter eingeschoben werden kann, d.h. der Freiraum ist größer als der Außendurchmesser des ummantelten Lichtwellenleiters. Zur Erleichterung der Fasereinführung kann sich die Durchtrittsöffnung z. B. in den Führungsteilen LG1 und LG2 konisch aufweiten. Ebenso kann die Grundplatte GPA mit Fasen oder Einlauftrichtern an den Enden versehen werden.

Die Fixierungsteile LC1 und LC2 weisen an ihrer Oberseite jeweils eine Abschrägung LC1S und LC2S auf, welche so dimensioniert ist, daß bei weggeschobener Preßhülse PC1 die Öffnung LC1O etwa genau so groß ist wie die Öffnung LG1O, und somit das Einführen eines ummantelten Lichtwellenleiters ohne weiteres (dargestellt ist nur gestrichelt der rechte Lichtwellenleiter LW2, dessen abgemantelter Teil mit LWF2 bezeichnet ist) möglich ist. Wenn die Einführung des Lichtwellenleiters beendet ist, dann wird, wie im rechten Teil der Fig. 4 dargestellt, die zugehörige Preßhülse PC2 auf das Fixierungsteil LC2 aufgeschoben und dieses nach innen gedrückt, wobei die Durchtrittsöffnung auf den Wert LC1O* verringert wird und dadurch der ummantelte Lichtwellenleiter gegen die Grundplatte GPA gepreßt wird. Im Gegensatz zu dem Führungsteil LG1 und LG2 sind die Fixierungsteile LC1 und LC2 so ausgebildet, daß sie durch eine elastische Verformung der Preßhülsen PC1 und PC2 nach innen gedrückt werden können und mittels der Preßhülse PC1 bzw. PC2 die Verringerung der Durchtrittsöffnung wie bei LC1O* dargestellt erreicht werden kann. Hierzu können die Fixierungsteile LC1 und LC2 z.B. aus Metall oder Kunststoffmaterial gefertigt werden. Bei einer Kunststoffvariante sind die verbleibenden seitlichen Stege sind so dünn, daß sie sich, in Richtung auf die Grundplatte GPA gesehen, dehnen lassen.

Es ist aber auch möglich, die Fixierungsteile LC1 und LC2 aus Metall zu fertigen, wobei sie mit Spiel in der Nut AuA gehalten sind. Insgesamt ist lediglich darauf zu achten, daß bei den Fixierungsteilen LC1 und LC2 eine radiale Verschiebbarkeit nach innen im für die Fixierung der ummantelten Lichtwellenleiter (z.B. LW2) notwendigen Umfang möglich ist. Bei der Metallvariante des Fixierungsteils LC1 ist die Durchtrittsöffnung LC 1O an den Enden leicht anzufasen oder abzurunden, da sonst die Enden der Lichtwellenleiter LW1 und LW2 nicht die Fixierungsteile anheben können. Das der Faserführung dienende Teil LF2 ist ebenfalls fest in der Längsnut AUA gehalten und weist eine Absenkung LF2T auf, welche etwa mit der Oberseite der durch die Längsnut AUA gebildeten Oberkante des Trägerkörpers TKA abschließt. Durch Längsverschieben (ausgehend von der Montageposition, wie bei PH1A dargestellt) werden die Preßhülsen in den Mittelbereich verschoben (wie bei PH2A dargestellt), und pressen dort die im Bereich der Erhöhung GPAM vorgesehenen abgemantelten Lichtleitfasern fest durch das zentrale Halteteil HZA nach unten.

Die Teile LF1 und LF2, sowie LG1 und LG2 bilden jeweils auch einen Anschlag für die Preßhülsen PH1A, PH2A sowie PC1 und PC2 und begrenzen durch ihre vorstehenden Teile LF1R und LF2R sowie LG1R und LG2R deren Längsverschiebung und sichern ihre Unverlierbarkeit. Die Schlitz-Öffnungen der Preßhülsen PC1,PC2 sowie PH1A und PH2A sind so groß gewählt, daß sie mit ihren Öffnungen an den vorstehenden Teilen LF1R,LF2R sowie LG1R und LG2R vorbeigeschoben werden können.

Die Preßhülsen PC1,PC2 und PH1A,PH2A sind mit einem entsprechenden Längsschlitz versehen, so daß sie auch in radialer Richtung schnappend (sie sind stets federnd z.B. aus Federstahl ausgebildet) auf den Trägerkörper TKA aufgeschoben werden können (vgl. Fig. 3). Anschließend erfolgt eine Drehung der Preßhülsen derart, daß der Längsschlitz, wie im linken Teil der Fig. 3 zu sehen ist, nach unten weist, während der sattelförmig geschlossene Teil dieser Preßhülsen im Bereich der in die Längsnut AUA eingelegten Einzelteile HZA und LC1 sowie LC2 liegt und diese in ihrer Position sichert und die Klemmung sowohl der ummantelten als auch der nicht ummantelten Lichtwellenleiterbereiche bewirkt.

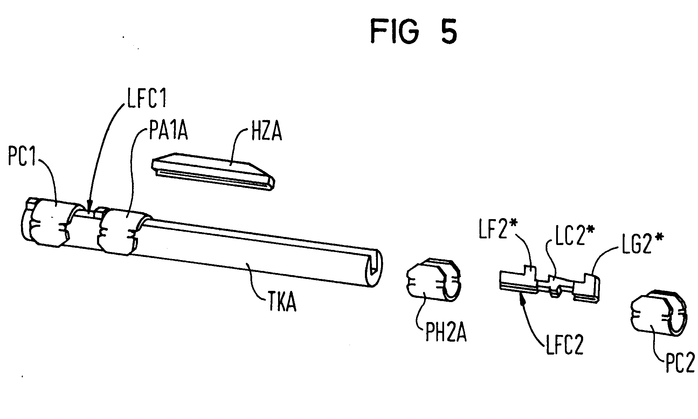

In Fig. 5 ist eine Abwandlung der Zugentlastung für die beschichteten Teile der Lichtwellenleiters dargestellt, wobei die Preßhülsen PC1,PC2 und PH1A und PH2A, der Trägerkörper TKA und das zentrale Halteteil HZA den gleichen Aufbau aufweisen, wie bei Fig. 3. Die Abwandlung besteht lediglich darin, daß die zur Zugentlastung des beschichteten Lichtwellenleiters dienenden Einzelteile LF2,LC2 und LG2 nach Fig. 3 hier in Fig. 5 als ein einziges durchgehendes Bauteil ausgebildet sind, welches links mit LFC2 bezeichnet ist. Die einzelnen Teilbereiche sind in ihrem grundsätzlichen Aufbau der in dem entsprechend Fig. 3 und 4 näher beschriebenen Struktur gleich geblieben und entsprechend mit den gleichen Bezugszeichen, ergänzt durch einen Stern, bezeichnet, nämlich als Führungsteil LF2* für die blanke Faser, als Fixierungsteil LC2* für den beschichteten Lichtwellenleiter als Führungsteil LG2* für den beschichteten Lichtwellenleiter.

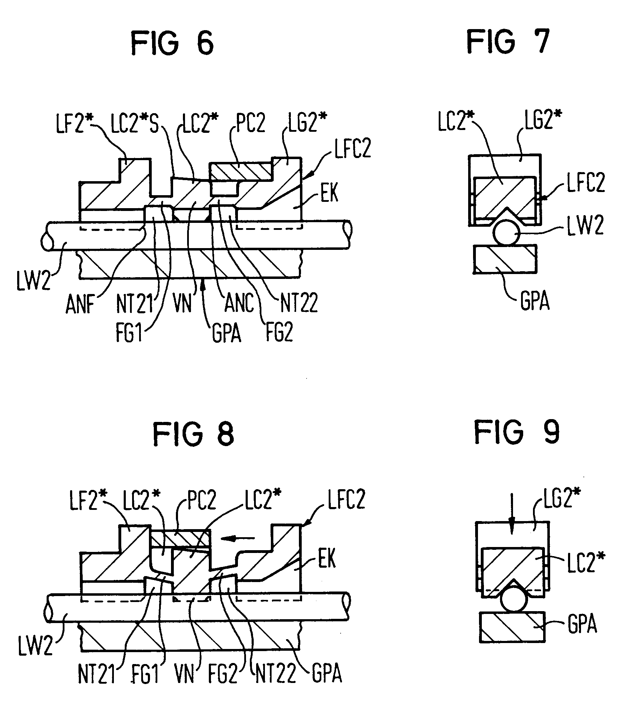

Zum besseren Verständnis der Funktion im einzelnen wird auf Fig. 6 und Fig. 7 Bezug genommen, wobei Fig. 6 in vergrößerter Darstellung einen Längsschnitt, und Fig. 7 in vergrößerter Darstellung den entsprechenden Querschnitt zeigt, und zwar in einer Lage, bei der es noch nicht zu einer Klemmung des umhüllten Lichtwellenleiters LW2 kommt.

Bei dem gemeinsamen Klemmkörper oder Halteteil LFC2 sind das inneren Führungsteil LF2*, das Fixierungsteil LC2* und das äußere Führungsteil LG2* mit dünnen Filmgelenken FG1 und FG2 miteinander verbunden. Das Führungsteil LF2* wird bleibend durch Preßpassung in den Enden des Nut AKA festgehalten. Das Fixierungsteil LC2* ist schmaler als die festsitzenden Führungsteile LF2* und LG2* dimensioniert (vgl. Fig. 7). Es läßt sich in radialer Richtung frei bewegen und wird durch die Rückstellmomente der beiden Filmgelenke FG1 und FG2 immer in eine günstige Einführungsposition für den Lichtwellenleiter LW2 nach Fig. 6 und Fig. 7 gehalten. Die Fasereinfädelung wird durch einen Einführkonus EK in den äußeren Führungsteilen LG2* und durch Anfasungen ANF und ANC am Führungsteil LF2* und Fixierungsteil LC2* erleichtert.

In der Seitenansicht nach Fig. 8 und in der Querschnittsdarstellung nach Fig. 9 ist derjenige Zustand dargestellt, in dem der beschichtete Lichtwellenleiter LW2 auf der Grundplatte GPA festgeklemmt wird. Hierzu ist die Klemmhülse PC2 axial so weit verschoben worden, daß sie auf die Schrägfläche LC2*S im Mittelteil LC2* des gemeinsamen Halteteils LFC2 aufgeschoben ist und das Material so weit nach innen drückt, daß dieses in Kontakt mit dem beschichteten Lichtwellenleiter LW2 kommt. Die Filmgelenke FG1 und FG2 werden gedehnt. Um diese Materialverschiebung und die dadurch bewirkte Klemmung zu erleichtern, sind in dem gemeinsamen Halte- und Klemmteil LFC2 Nuten NT21 und NT22 vorgesehen, welche etwa beiderseits der Schrägfläche LC2*S an der Innenseite der gemeinsamen Halte- und Klemmeinrichtung LFC2 liegen. Der zwischen den beiden Nuten NT21 und NT22 liegende stegförmige Teil VN wird in radialer Richtung nach unten gepreßt und liegt, wie aus Fig. 8 ersichtlich ist, in der Art einer Halte- oder Klemmnase an der Beschichtung des Lichtwellenleiters LW2 an und hält diesen fest. Es ist zweckmäßig, das gemeinsame Halte- und Klemmteil LFC2 aus elastischem Material herzustellen, wodurch bei einer Längsverschiebung der Preßhülse PC2 aus der in Fig. 8 und Fig. 9 dargestellten Lage in die Position gemäß Fig. 6 der Lichtwellenleiter LW2 wieder freigegeben wird und z.B. eine erneute und verbesserte Faserführung und Klemmung durchgeführt werden kann. Dabei federn die überdehnten Filmgelenke FG1 und FG2 durch ihre Rückstellmomente wieder in die Ausgestaltung von Fig. 6 zurück und geben den Lichtwellenleiter LW2 frei. Im entspannten Zustand nach Fig. 6 und Fig. 7 läßt sich der Lichtwellenleiter LW2 in einfacher Weise aus der Klemmeinrichtung entnehmen und, z.B. nach einer Nachbehandlung seiner Stirnfläche, erneut einführen. Das gemeinsame Halte- und Klemmteil LFC2 braucht für diesen wiederholten Montagevorgang nicht entfernt zu werden, weil durch das elastische Auffedern des Mittelteils in einfacher und zuverlässiger Weise die Freigabe des Lichtwellenleiters LW2 erfolgt.

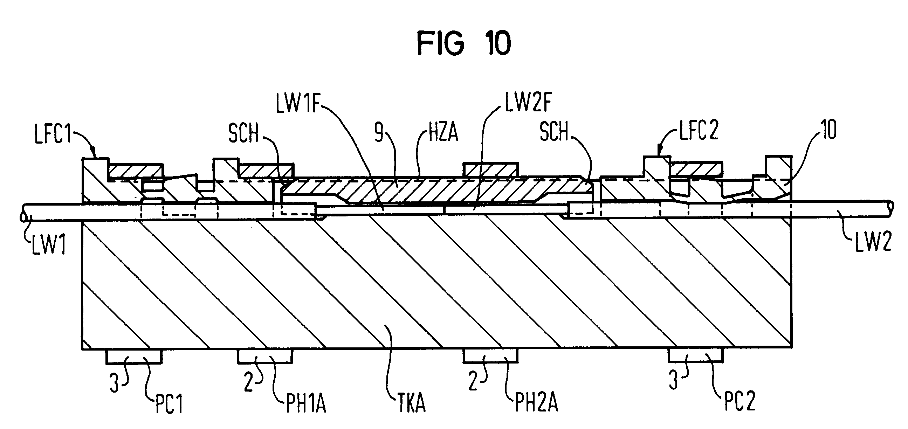

Fig. 10 zeigt den kompletten Verbinder mit dem Einzelaufbau entsprechend den Fig. 6 - 9 im Längsschnitt, wobei im linken Teil jeweils die Stellung gezeichnet ist, welche vor oder bei der Einführung des Lichtwellenleiters vorliegt. Das zentrale Halteteil HZA ist an den Enden mit Schrägen SCH versehen und der gegen die Klemmeinrichtung LFC1 geschobene Klemmring PH1A liegt nicht auf dem zentralen Halteteil HZA auf. Beim Einführen des Lichtwellenleiters LW1 hebt sich das zentrale Halteteil HZA radial, es kann aber nicht aus der Nut AUA herausfallen, da es durch die Klemmringe PH1A und PH2A (letzterer ist bei der Montage ganz nach rechts geschoben) gehalten werden. Der rechte Teil der Fig. 10 zeigt die Endstellung, d.h. mit geklemmter Lichtleitfaser LW2F und geklemmtem beschichteten Lichtwellenleiter LW2. Das Grundteil TKA und das zentrale Halteteil HZA sind ebenso wie in Fig. 5 dimensioniert. Beide Teile werden aus einem mit glas- oder Kohlefasern verstärktem hochfesten Kunststoff spritzgegossen. Harte, spröde Kunststoffe wie PPS oder Ryton mit höchtsmöglicher Zeitstandfestigkeit eignen sich bestens. Die Klemmkörper LFC1 und LFC2 sind aus einem Kunststoff mit hoher Biegewechselfestigkeit und guter Zeitstandfestigkeit zu spritzen. Kunststoffe wie POM, ABS und PUR lassen sich gut einsetzen.

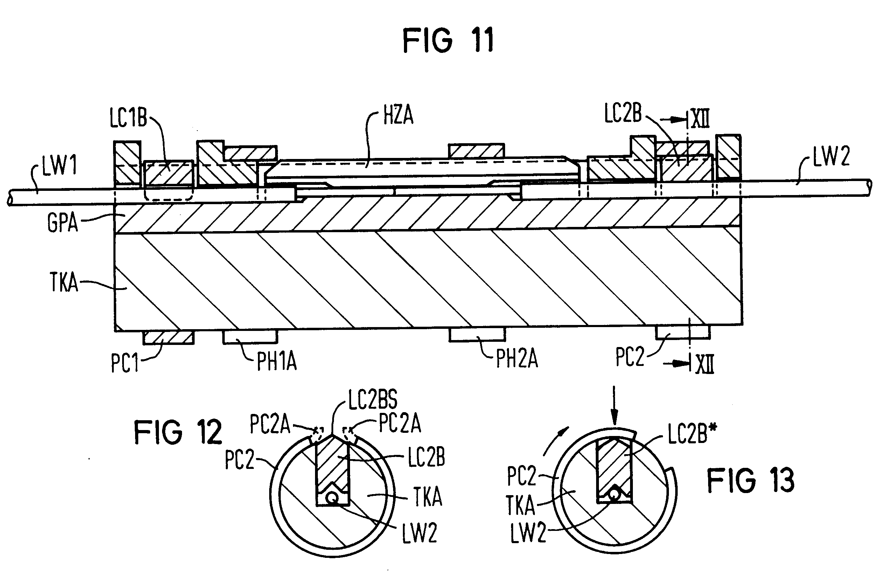

Bei der Anordnung nach den Fig. 11 - 13 ist eine Ausführungsform dargestellt, bei welcher die Klemmung des beschichteten Lichtwellenleiters LW2 nicht durch eine Längsverschiebung sondern durch eine Drehung der jeweiligen Preßhülsen PC1 bzw. PC2 durchgeführt wird. Im einzelnen ist hier zu der zur Fixierung des beschichteten Lichtwellenleiters LW2 dienende Bereich LC2B (also entsprechend LC2 in Fig. 3 bzw. LC2* in Fig. 5) so ausgebildet, daß er über das zu einem Kreis ergänzte Profil des Trägerkörpers TKA hinausragt. Dieser hinausragende Teil des Klemmelementes LC2B ist etwa dreiecksförmig gestaltet und mit LC2BS bezeichnet. Die Halteteile aus Metall sind in die Nut AKA geklobt. Im Zustand bei oder während der Montage ist die Preßhülse PC2 so angeordnet, daß ihr Längsschlitz (der größer ausgebildet ist als die Breite des Klemmelementes LC2B) so liegt, daß das Klemmelement LC2B sich radial nach oben verschieben kann, also in einer radial beweglichen und freigegebenen Position liegt. In dieser Position kann der beschichtete Lichtwellenleiter LW2 in axialer Richtung eingeschoben werden und gleitet in der Führungsnut des Halte-und Klemmteils LC2B entlang. Sobald der Lichtwellenleiter LW2 seine endgültige Montageposition erreicht hat, wird die Preßhülse PC2 gedreht und ihre Enden gleiten über die nach oben ragende Spitze LC2BS des Klemmteiles LC2B hinweg und drücken dieses, wie in Fig. 13 gezeigt, nach unten auf den beschichteten Lichtwellenleiter LW2, wodurch dieser in seiner erreichten Position festgehalten und arretiert wird.

Es ist möglich, am Rand der Preßhülse PC2 einen, wie gestrichelt angedeutet, nach oben ragenden Ansatz PC2A vorzusehen, wodurch das Klemmteil LC2B in seiner Position unverlierbar gehalten ist, weil der Ansatz PC2A ein Herausfallen verhindert und doch ein ausreichendes radiales Spiel liefert.

Es ist auch möglich, bei entsprechender Gestaltung des zentralen Halteteils HZA (d.h. mit einer nach oben zeigenden dreiecksförmigen Abschrägung) die Fixierung dieses Teiles ebenfalls durch Drehung der Preßhülsen PH2A und PH1A in seiner Lage zu fixieren. Auch hier besteht die Möglichkeit, eine unverlierbare Halterung dieses Teiles durch entsprechende Ausformung der Preßhülsen PH1A und PH2A analog dem Ansatz PC2A durchzuführen.

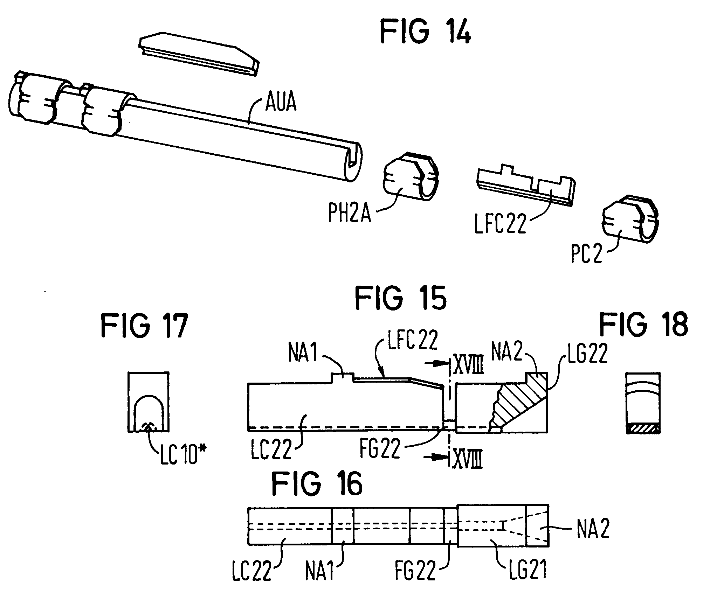

Eine Weiterentwicklung des Verbinders nach Fig. 5 zeigt Fig. 14. Es sind vor allem das Halteteil LFC22 entsprechend Fig. 15 bis Fig. 18 weiter ausgestaltet worden. Das Führungsteil LG22 wird in die Nut AUA eingepreßt. Ein Filmgelenk FG22 verbindet das Führungsteil LG22 mit dem Fixierungsteil LC22 wie in Fig. 15, 16 und 18 dargestellt. Das Fixierungsteil LC22 ist schmaler. Das Filmgelenk FG22 ist so auszulegen, daß das Fixierungsteil LC22 nicht abreißt, wenn die Preßhülse PH2A aufgeschoben wird. Die Nasen NA1 und NA2 dienen als Anschlag für die Verschiebung der Preßhülsen PH2A und PC2. Das Filmgelenk FG22 ist aber so elastisch zu gestalten, daß der Lichtwellenleiter das Fixierungsteil LC22 noch leicht hochheben kann. Der rechte Teil LG22 von Fig. 15 und Fig. 16 ist in die Nut AUA eingepreßt, der linke Teil ist beweglich.

Die V-förmige Durchtrittsöffnung LC1O* ist am Unterteil von LFC22 durchgehend. Ein großer Einführungstrichter erleichtert die Einfädelung des Lichtwellenleiters.

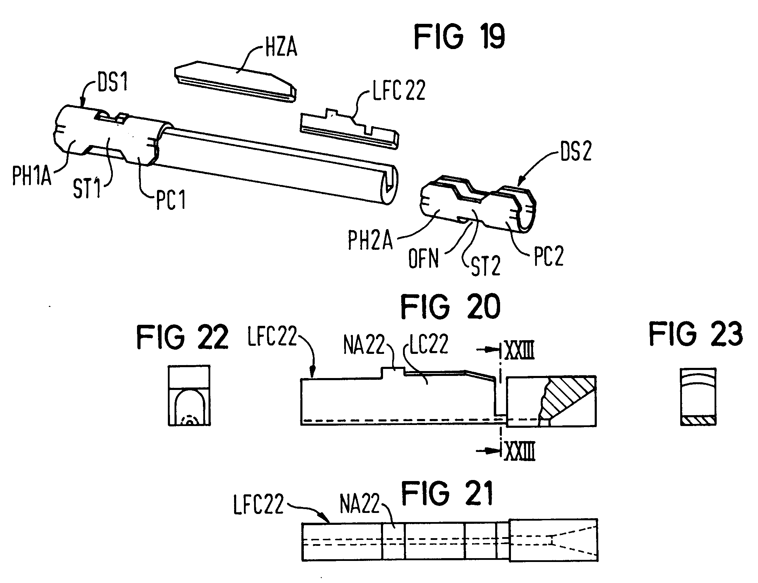

Eine Verbesserung der Handhabung für den Anwender zeigt Fig. 19 Es sind je zwei Preßhülsen PH1A und PC1 bzw. PH2A und PC2 mit Stegen ST1 bzw. ST2 verbunden und als Doppelpreßhülsen DS1 bzw. DS2 ausgebildet. Die Doppelpreßhülsen DS1 und DS2 sind mit den Stegen ST1 bzw. ST2 auszustanzen, bevor sie gerollt werden. Das Klemmen der Lichtleitfaserenden mit dem zentralen Hauptelement HZA und der beschichteten Lichtwellenleiter mit dem gemeinsamen Fixierungsteil LFC22 erfolgt hier somit in einem Arbeitsgang. Für die Vorfixierung des Lichtwellenleiters wäre eine Klemmung am Coating wünschenswert, bevor das zentrale Halteteil HZA auf die Glasfaser drückt.

Nach Fig. 20 bis 23 wird das gemeinsame Halteteil LFC22 mit nur einer vorstehenden Nase NA22 hergestellt. Diese dient als rechts- wie auch linksseitiger Anschlag für den Doppelschiebering DS2 und liegt in der durch die beiderseitigen Stege ST2 gebildeten Öffnung OFN nach Fig. 19.

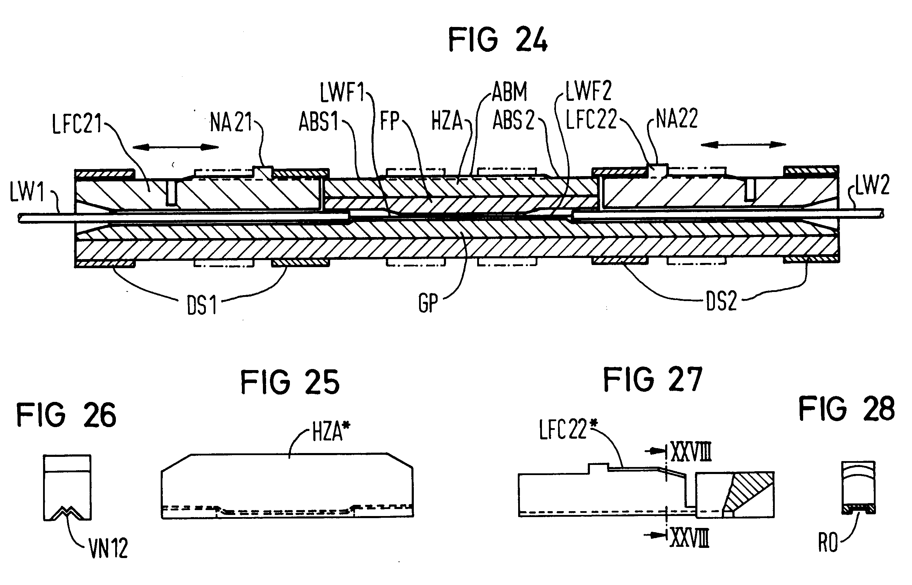

In Fig. 24 ist der Verbinder nach den Fig. 19 bis 23 im Längsschnitt vergrößert dargestellt. Die Dopelpreßhülsen DS1 bzw. DS2 sind zunächst ganz nach außen geschoben und stoßen an den vorstehenden Nasen NA21 und NA22 der jeweiligen Halteteile LFC21 und LFC22. Der Lichtwellenleiter LW2 kann von rechts eingeführt werden. Wird die Doppelpreßhülse DS2 etwas zur Verbindermitte geschoben, so klemmt sie zunächst nur das Coating von LW2. Dann kann der linke Lichtwellenleiter LW1 vorgeschoben werden, bis er gegen das Ende des Lichtwellenleiters LWF2 stößt. Die Doppelpreßhülse DS1 wird ganz nach innen bis zum Anschlag geschoben (wie gestrichelt dargestellt). Das zentrale Halteteil HZA ist seitlich mit längeren Abstufungen ABS1 und ABS2 an den Enden versehen während das Mittelteil ABM erhöht ausgebildet ist. Wird die Doppelpreßhülse DS2 weitergeschoben, klemmt sie das zentrale Halteteil HZA auf das Ende der Lichtleitfaser LWF2, weil sie auf dem erhöhten Mittelteil ABM aufliegt (ebenso wie DS1). Versuche mit guten Ergebnissen wurden mit Prototypen nach Fig. 24 durchgeführt, wobei die inneren Präzisionsteile wie Grundplatte GP und die Führungsplatte FP noch aus Silizium statt aus Kunststoff hergestellt wurden.

Es ist auch möglich, anstelle nur eines einzigen Lichtwellenleiters mehrere Lichtwellenleiter parallel nebeneinander in einer Klemmeinrichtung entsprechend den vorstehenden Figuren zu befestigen. Es sind dann lediglich entsprechende mehrere Parallelnuten, z.B. in den entsprechenden Führungen und Halterungen z. B. LFC22 für die beschichteten Lichtwellenleiter vorzusehen und entsprechend mehrere V-Nuten im Bereich der Grundplatte GPA und/oder des zentralen Halteteiles HZA.

Fig. 25 zeigt ein derartiges zentrales Halteteil HZA* in Seitenansicht und Fig. 26 in Frontansicht. Für die beiden hier nicht dargestellten Leitfasern ist eine Doppel-V-Nut VN12 vorgesehen.

Fig. 27 und Fig. 28 zeigen das Führungsteil LFC22* nach Fig. 20 bis 23 lediglich insofern abgewandelt als eine vergrößerte rechteckige Öffnung RO für die gleichzeitige Aufnahme zweier beschichteter Lichtwellenleiter vorgesehen ist.

Das erfindungsgemäße Spleißteil (Faserverbinder) zeichnet sich durch einfachen Aufbau, durch schnelle, werkzeugfreie Montierbarkeit und niedrige erreichbare Dampfungswerte (0,0 bis 0,2 dB) bei großem Temperaturbereich (unter 0,05 dB im Bereich zwischen -40°C und +85°C bei Strukturen entsprechend Fig. 11 bis 13) aus.

## Patentansprüche

1. Spleißverbinder zur Verbindung der Enden zweier Lichtwellen leiter (LWL1, LWL2), im weiteren auch LWL genannt, mit einem Trägerkörper (TKA), der eine Längsnut (AUA) aufweist, mit einem im zentralen Bereich der Nut angeordneten Halteteil (HZA), das in der Nut (AUA) in radialer Richtung beweglich ist und das auf der der Nut (AUA) zugewandten Fläche eine Rille zur Führung und Klemmung der abgemantelten LWL-Enden aufweist, mit Preßhülsen (PH1, PH2), die außen auf dem Trägerkörper (TKA) aufsitzen und längs verschiebbar sind zum Zusammenhalt von Halteteil (HZA) und Trägerkörper (TKA) im montiertem Zustand und zur Erzeugung des für die Klemmung erforderlichen Anpreßdrucks,
**gekennzeichnet durch**
jeweils auf einer Seite des zentralen Bereichs in der Nut angeordnete Mittel zur Fixierung eines ummantelten LWL-Abschnitts und zur Führung eines abgemantelten LWL-Abschnitts, wobei die Mittel zur Fixierung und Führung entweder aus einem in radialer Richtung in der Nut beweglichen Bauteil (LFC2) mit einem Fixierungsteil (LC2*) und einem Führungsteil (LF2*) bestehen, oder aus zwei Bauteilen, nämlich einem in radialer Richtung in der Nut beweglichen Fixierungsteil (LC2) und einem Führungsteil (LF2) bestehen,
und durch zwei zusätzliche, jeweils auf einer Seite des zentralen Bereichs auf dem Trägerkörper aufsitzende, federnde Preßhülsen (PC1, PC2) zur Erzeugung des für die Fixierung des ummantelten LWL-Abschnitts erforderlichen Anpreßdrucks.

2. Verbindungseinrichtung nach Anspruch 1,
**dadurch gekennzeichnet,**
daß die Führungen für die Lichtwellenleiter (LF1, LF2) als, vorzugsweise V-förmige, Zentrierrille (ZR) ausgebildet sind.

3. Verbindungseinrichtung nach einem der vorhergehenden Ansprüche,
**dadurch gekennzeichnet,**
daß die Führung in einer Führungsplatte (FP), vorzugsweise aus Siliziummaterial, angeordnet ist.

4. Verbindungseinrichtung nach einem der vorhergehenden Ansprüche,
**dadurch gekennzeichnet,**
daß die Führung für die Lichtwellenleiter (LF1, LF2) in der Trennebene zwischen zwei aneinanderstoßenden jedoch gegeneinander beweglichen Teilen (GP,FP) liegt.

5. Verbindungseinrichtung nach einem der vorhergehenden Ansprüche,
**dadurch gekennzeichnet,**
daß die Preßhülsen (PH1,PH2) einen in Längsrichtung verlaufenden Schlitz (z.B. SP1) aufweisen.

6. Verbindungseinrichtung nach einem der vorhergehenden Ansprüche,
**dadurch gekennzeichnet,**
daß die Führungen für die Lichtwellenleiter (LF1,LF2) einen entsprechend verbreiterten Einführungsbereich (EB1,EB2) aufweisen.

7. Verbindungseinrichtung nach einem der vorhergehenden Ansprüche,
**dadurch gekennzeichnet,**
daß das zentrale Halteteil (HZ) in seinen äußeren Endbereichen (EPA1,EPA2) nach innen abgeschrägt ausgebildet ist.

8. Verbindungseinrichtung nach einem der vorhergehenden Ansprüche,
**dadurch gekennzeichnet,**
daß das Fixierungsteil (LC2,LC2*,LC2B) und/oder das Faserführungsteil (LF2,LF2*) und/oder das Führungsteil (LG2,LG2*) für den beschichteten Lichtwellenleiter (LW2) mit einer zum parallel Lichtwellenleiter gerichteten Längsnut versehen sind.

9. Verbindungseinrichtung nach einem der vorhergehenden Ansprüche,
**dadurch gekennzeichnet,**
daß das Fixierungsteil (LC2*), das Faserführungsteil (LF2*) und das Führungsteil (LG2*) für den beschichteten Lichtwellenleiter (LW2) einteilig als gemeinsames Halte- und Klemmteil ausgebildet sind (LFC2).

10. Verbindungseinrichtung nach Anspruch 9,
**dadurch gekennzeichnet,**
daß das Führungsteil (LG2*) des gemeinsamen Halte- und Klemmteiles (LFC2) elastisch verformbar ist.

11. Verbindungseinrichtung nach Anspruch 10,
**dadurch gekennzeichnet,**
daß das gemeinsame Halte- und Führungsteil (LFC2) als ganzes aus elastischem Material, insbesondere aus Kunststoffmaterial besteht.

12. Verbindungseinrichtung nach Anspruch 11,
**dadurch gekennzeichnet,**
daß das gemeinsame Halte- und Klemmteil (LFC2) aus PPS Material besteht.

13. Verbindungseinrichtung nach einem der vorhergehenden Ansprüche,
**dadurch gekennzeichnet,**
daß die Preßhülsen (PC1,PC2;PH1A,PH2A) einen offenen Längsschlitz solcher Breite aufweisen, daß sie auf den Trägerkörper (TKA) aufschnappbar sind.

14. Verbindungseinrichtung nach einem der vorhergehenden Ansprüche,
**dadurch gekennzeichnet,**
daß die Preßhülsen (PC1,PC2;PH1A,PH2A) aus elastischem Material, insbesondere Federstahl bestehen.

15. Verbindungseinrichtung nach einem der vorhergehenden Ansprüche,
**dadurch gekennzeichnet,**
daß im Bereich des Fixierungsteils (LC2,LC2*) Erhöhungen (LC2S,LC2*S,LC2BS) vorgesehen sind, auf welche die zugehörige Preßhülse (PC2) im End-Montagezustand aufgebracht ist und dabei eine radial nach innen wirkende, den beschichteten Lichtwellenleiter (LW2) arretierende Kraft erzeugt ist.

16. Verbindungseinrichtung nach Anspruch 15,
**dadurch gekennzeichnet,**
daß die Erhöhung die Form einer Schrägfläche aufweist, welche sich in axialer Richtung erstreckt (LC2S,LC2*S).

17. Verbindungseinrichtung nach Anspruch 15,
**dadurch gekennzeichnet,**
daß die Erhöhung in Form einer vorstehenden, vorzugsweise dreiecksförmigen Spitze (LC2BS) ausgebildet ist, über welche die Preßhülse (PC2) durch Drehen in Umfangsrichtung verschoben wird.

18. Verbindungseinrichtung nach einem der vorhergehenden Ansprüche,
**dadurch gekennzeichnet,**
daß an der Preßhülse (PC2) Ansätze (PC2A) vorgesehen sind, welche im Bereich des Längsschlitzes eine unverlierbare Halterung des Fixierungsteils (LC2B) bewirken.

19. Verbindungseinrichtung nach einem der vorhergehenden Ansprüche,
**dadurch gekennzeichnet,**
daß jeweils zwei Preßhülsen (PH1A, PC1; PH2A, PC2) über einen Steg (ST1, ST2) miteinander verbunden sind.

20. Verbindungseinrichtung nach Anspruch 19,
**dadurch gekennzeichnet,**
daß durch einen in einer Öffnung der Doppel-Preßhülse (DS1, DS2) vorgesehenen Anschlag (NA22) deren Endpositionen festgelegt sind.

21. Verbindungseinrichtung nach einem der vorhergehenden Ansprüche,
**dadurch gekennzeichnet,**
daß der jeweils der Eintrittsstelle der Lichtwellenleiter zugeordnete äußere Teilbereich der Führungs- und Fixierungsteile im Trägerkörper eingepreßt gehalten ist, während der innere Teil beweglich angeordnet ist.

22. Verbindungseinrichtung nach Anspruch 21,
**dadurch gekennzeichnet,**
daß bei einteiliger Ausbildung der Führungs- und Fixierungsteile diese über eine elastische Verbindung, insbesondere über ein Filmscharnier oder dergleichen miteinander verbunden sind.

## Claims

1. Splice link for connecting the ends of two optical waveguides (LWL1, LWL2), also termed LWL below, having a substrate (TKA) which has a longitudinal slot (AUA), having a retaining part (HZA) which is arranged in the central region of the slot, can be moved in the slot (AUA) in the radial direction and has on the surface facing the slot (AUA) a groove for guiding and clamping the stripped LWL ends, having press sleeves (PH1, PH2) which are seated outside on the substrate (TKA) and are longitudinally displaceable for the purpose of holding the retaining part (HZA) and substrate (TKA) together in the assembled state and of producing the contact pressure required for the clamping, characterized by means, arranged in each case in the slot on one side of the central region, for fixing a cladded LWL section and for guiding a stripped LWL section, the means for fixing and guiding comprising either a component (LFC2) which can be moved in the slot in the radial direction and has a fixing part (LC2*) and a guide part (LF2*), or comprising two components, specifically a fixing part (LC2) which can be moved in the slot in the radial direction and a guide part (LF2), and by two additional, resilient press sleeves (PC1, PC2), which are seated in each case on the substrate on one side of the central region, for producing the contact pressure required for fixing the cladded LWL section.

2. Connecting device according to Claim 1, characterized in that the guides for the optical waveguides (LF1, LF2) are constructed as, preferably V-shaped, centring grooves (ZR).

3. Connecting device according to one of the preceding claims, characterized in that the guide is arranged in a guide plate (FP), preferably made from silicon material.

4. Connecting device according to one of the preceding claims, characterized in that the guide for the optical waveguides (LF1, LF2) is situated in the parting plane between two parts (GP, FP) which abut one another but can be moved relative to one another.

5. Connecting device according to one of the preceding claims, characterized in that the press sleeves (PH1, PH2) have a slit (for example, SP1) extending in the longitudinal direction.

6. Connecting device according to one of the preceding claims, characterized in that the guides for the optical waveguides (LF1, LF2) have a correspondingly widened lead-in region (EB1, EB2).

7. Connecting device according to one of the preceding claims, characterized in that the central retaining part (HZ) is constructed inwardly bevelled in its outer end regions (EPA1, EPA2).

8. Connecting device according to one of the preceding claims, characterized in that the fixing part (LC2, LC2*, LC2B) and/or the fibre guide part (LF2, LF2*) and/or the guide part (LG2, LG2*) for the coated optical waveguide (LW2) are provided with a longitudinal slot directed parallel to the optical waveguide.

9. Connecting device according to one of the preceding claims, characterized in that the fixing part (LC2*), the fibre guide part (LF2*) and the guide part (LG2*) for the coated optical waveguide (LW2) are constructed in one piece as a joint retaining and clamping part (LFC2).

10. Connecting device according to Claim 9, characterized in that the guide part (LG2*) of the common retaining and clamping part (LFC2) is elastically deformable.

11. Connecting device according to Claim 10, characterized in that as a whole the common retaining and clamping part (LFC2) comprises an elastic material, preferably plastic material.

12. Connecting device according to Claim 11, characterized in that the common retaining and clamping part (LFC2) comprises PPS material.

13. Connecting device according to one of the preceding claims, characterized in that the press sleeves (PC1, PC2; PH1A, PH2A) have an open longitudinal slit of such a width that they can be snapped onto the substrate (TKA).

14. Connecting device according to one of the preceding claims, characterized in that the press sleeves (PC1, PC2; PH1A, PH2A) comprise elastic material, preferably spring steel.

15. Connecting device according to one of the preceding claims, characterized in that provided in the region of the fixing part (LC2, LC2*) are elevations (LC2S, LC2*S, LC2BS) to which the associated press sleeve (PC2) is applied in the final assembled state and in the process a force acting radially inwards is produced which locks the coated optical waveguide (LW2).

16. Connecting device according to Claim 15, characterized in that the elevation has the form of an inclined surface which extends in the axial direction (LC2S, LC2*S).

17. Connecting device according to Claim 15, characterized in that the elevation is constructed in the form of a projecting, preferably triangular tip (LC2BS) over which the press sleeve (PC2) is displaced by rotation in the circumferential direction.

18. Connecting device according to one of the preceding claims, characterized in that provided on the press sleeve (PC2) are lugs (PC2A) which effect captive retention of the fixing part (LC2B) in the region of the longitudinal slit.

19. Connecting device according to one of the preceding claims, characterized in that in each case two press sleeves (PH1A, PC1; PH2A, PC2) are connected to one another via a web (ST1, ST2).

20. Connecting device according to Claim 19, characterized in that a stop (NA22) provided in an opening of the double press sleeve (DS1, DS2) fixes the end positions thereof.

21. Connecting device according to one of the preceding claims, characterized in that the outer subregion, respectively assigned to the entrance point of the optical waveguides, of the guiding and fixing parts is held pressed in in the substrate, while the inner part is arranged movably.

22. Connecting device according to Claim 21, characterized in that in the case of the construction of the guiding and fixing parts in one piece, these are connected to one another via an elastic connection, preferably via a film hinge or the like.

## Revendications

1. Connecteur servant à réunir les extrémités de deux quides d'ondes lumineuses (LWL1, LWL2), également désignés ci-après par LWL, comportant un corps de support (TKA), qui possède une rainure longitudinale (AUA), une partie de retenue (HZA) disposée dans la partie centrale de la rainure et qui est déplaçable dans une direction radiale dans la rainure (AUA) et qui possède, sur la face tournée vers la rainure (AUA), un sillon pour le guidage et le serrage des extrémités dénudées des guides LWL, et des douilles de serrage (PH1, PH2), qui prennent appui extérieurement sur le corps de support (TKA) et sont déplaçables longitudinalement de manière à maintenir assemblées la partie de retenue (HZA) et le corps de support (TKA) à l'état monté et à produire la pression nécessaire pour le serrage,
caractérisé par
des moyens disposés respectivement d'un côté de la partie centrale dans la rainure, pour fixer une section gainée d'un guide LWL et pour guider une section dénudée d'un guide (LWL), les moyens de fixation et de guidage étant constitués soit par un composant (FC2) mobile dans la rainure dans une direction radiale et composant une partie de fixation (LC2*) et une partie de guidage (LF2*), soit par deux composants, à savoir une partie de fixation (LC2) mobile dans une direction radiale dans la rainure et une partie de guidage (LF2), et par deux douilles de serrage élastiques supplémentaires (PC1, PC2), qui prennent appui respectivement d'un côté de la zone centrale sur le corps de support et servent à produire la pression de serrage nécessaire pour la fixation de la section gainée du guide LWL.

2. Dispositif connecteur suivant la revendication 1, caractérisé par le fait que les guides pour les guides d'ondes lumineuses (LF1, LF2) sont réalisés sous la forme de sillons de centrage (ZR), de préférence en forme de V.

3. Dispositif connecteur suivant l'une des revendications précédentes, caractérisé par le fait que le guide est disposé dans une plaque de guidage (FP), réalisée de préférence en un matériau à base de silicium.

4. Dispositif connecteur suivant l'une des revendications précédentes, caractérisé par le fait que le guide pour les guides d'ondes lumineuses (LF1, LF2) est situé dans le plan de séparation entre les deux parties (GF, FP) qui sont en aboutement, mais sont mobiles l'une par rapport à l'autre.

5. Dispositif connecteur suivant l'une des revendications précédentes, caractérisé par le fait que les douilles de serrage (PH1, PH2) possèdent une fente (par exemple SP1) qui s'étend dans la direction longitudinale.

6. Dispositif connecteur suivant l'une des revendications précédentes, caractérisé par le fait que les guides pour les guides d'ondes lumineuses (LF1, LF2) possèdent une zone d'introduction (EB1, EB2), qui ont une forme élargie correspondante.

7. Dispositif connecteur suivant l'une des revendications précédentes, caractérisé par le fait que la partie centrale de retenue (HZ) est réalisée avec un biseau dirigé vers l'intérieur au niveau de ses zones d'extrémité extérieures (EPA1, EPA2).

8. Dispositif connecteur suivant l'une des revendications précédentes, caractérisé par le fait que la partie de fixation (LC2, LC2*, LC2B) et/ou la partie (LF2, LF2*) de guidage des fils et/ou la partie de guidage (LG2, LG2*) pour le guide d'ondes lumineuses recouvert (LW2) sont pourvues d'une rainure longitudinale dirigée parallèlement au guide d'ondes lumineuses.

9. Dispositif connecteur suivant l'une des revendications précédentes, caractérisé par le fait que la partie de fixation (LC2*), la partie (LF2*) de guidage des fibres et la partie de guidage (LG2*) pour les guides d'ondes lumineuses recouverts (LW2) sont réalisées d'un seul tenant sous la forme d'un élément commun de retenue et de serrage (LFC2).

10. Dispositif connecteur suivant la revendication 9, caractérisé par le fait que la partie de guidage (LG2*) de l'élément commun de retenue et de serrage (LFC2) est déformable élastiquement.

11. Dispositif connecteur suivant la revendication 10, caractérisé par le fait que l'élément commun de retenue et de guidage (LFC2) est réalisé dans son ensemble en un matériau élastique, notamment en une matière plastique.

12. Dispositif connecteur suivant la revendication 11, caractérisé par le fait que l'élément commun de retenue et de serrage (LFC2) est réalisé en un matériau PPS.

13. Dispositif connecteur suivant l'une des revendications précédentes, caractérisé par le fait que les douilles de serrage (PC1, PC2; PH1A, PH2A) possèdent une fente longitudinale ouverte possédant une largeur telle que ces douilles s'encliquettent sur le corps de support (TKA).

14. Dispositif connecteur suivant l'une des revendications précédentes, caractérisé par le fait que les douilles de serrage (PC1, PC2; PH1A, PH2A) sont réalisées en un matériau élastique, notamment un acier pour ressorts.

15. Dispositif connecteur suivant l'une des revendications précédentes, caractérisé par le fait que dans la zone de la partie de fixation (LC2, LC2*), il est prévu des parties surélevées (LC2S, LC2*S, LC2BS), sur lesquelles la douille de serrage associée (PC2) est disposée dans l'état de montage final, cette douille de serrage produisant une force dirigée radialement vers l'intérieur et qui bloque le guide d'ondes lumineuses recouvert (LW2).

16. Dispositif connecteur suivant la revendication 15, caractérisé par le fait que la partie surélevée possède la forme d'une surface oblique, qui s'étend dans une direction axiale (LC2S, LC2*S).

17. Dispositif connecteur suivant la revendication 15, caractérisé par le fait que la partie surélevée est réalisée avec la forme d'une pointe saillante, de préférence triangulaire (LC2BS), par-dessus laquelle la douille de serrage (PC2) est déplacée par rotation, dans la direction circonférentielle.

18. Dispositif connecteur suivant l'une des revendications précédentes, caractérisé par le fait que sur la douille de serrage (PC2) sont prévus des appendices saillants (PC2A), qui réalisent, au niveau de la fente longitudinale, une fixation imperdable de l'élément de fixation (LC2B).

19. Dispositif connecteur suivant l'une des revendications précédentes, caractérisé par le fait que respectivement deux douilles de serrage (PH1A, PC1; PH2A, PC2) sont reliées entre elles par l'intermédiaire d'une barrette (ST1, ST2).

20. Dispositif connecteur suivant la revendication 19, caractérisé par le fait que les positions d'extrémité de la douille de serrage double (DS1, DS2) sont fixées par une butée (NA22), qui est prévue dans une ouverture de ces douilles.

21. Dispositif connecteur suivant l'une des revendications précédentes, caractérisé par le fait que la zone partielle extérieure, associée respectivement au point d'entrée des guides d'ondes lumineuses, des éléments de guidage et de fixation est retenue à l'état enfoncé dans le corps de support, tandis que la partie intérieure est montée mobile.

22. Dispositif connecteur suivant la revendication 21, caractérisé en ce que, dans le cas d'une réalisation monobloc des éléments de guidage et de fixation, ces derniers sont reliés entre eux par l'intermédiaire d'une liaison élastique, notamment par l'intermédiaire d'une charnière en forme de pellicule ou analogue.
